# EUROPEAN PATENT APPLICATION

(11) **EP 4 207 332 A1**
(43) Date of publication of application: **05.07.2023**
(21) Application number: 21894489.0
(22) Date of filing: 05.11.2021
(51) Int. Cl.: H01M 4/04, H01M 4/139, B23K 26/082, B23K 26/38

(54) **LASER PROCESSING APPARATUS**

(30) Priority: 20.11.2020 JP 2020193336
(71) Applicant: Komatsu NTC Ltd., Nanto-City, Toyama Toyama 939-1595 (JP)
(72) Inventor: OKITA, Isao, Nanto-city, Toyama 9391595 (JP); YANAGIDA, Hiroshi, Nanto-city, Toyama 9391595 (JP); YAMADA, Akira, Nanto-city, Toyama 9391595 (JP)
(74) Representative: Flügel Preissner Schober Seidel
(86) International application number: PCT/JP2021/040753
(87) International publication number: WO 2022/107615

(57) **Abstract**

A laser processing device includes a conveyance device, a laser irradiating unit, a controller, and a guide. The conveyance device conveys a strip electrode in a conveyance direction. The laser irradiating unit irradiates the strip electrode with a laser beam and is configured to change the irradiating direction of the laser beam. The controller controls the laser irradiating unit so as to cut the strip electrode into a tab shape by causing the laser beam to move along a predetermined path on the strip electrode. The guide holds the strip electrode. The guide includes a notch. The notch has a shape that follows at least a portion of the predetermined path.

## Description

### Technical Field

The present invention relates to a laser processing device.

### Background Art

Strip electrodes are used in secondary batteries such as lithium ion batteries. A strip electrode includes a metal foil and an active material layer. The metal foil has a sheet-like shape. The active material layer is provided to the surface of the metal foil. An uncoated section that is not covered by the active material layer is provided along an edge of the metal foil in the strip electrode.

Conventionally, a laser processing device is used for processing the uncoated section of the strip electrode. For example, Patent Document No. 1 discloses a laser processing device that cuts the uncoated section into a desired shape using a laser beam. In this laser processing device, the uncoated section is cut in a tab shape by changing the direction of the laser beam irradiated from a head.

### Prior Art Document

### Reference

Patent Document No. 1: Japanese Patent Laid-open No. 2014-210277

### Summary of the Invention

### Problem to be Resolved by the invention

If the strip electrode rattles during cutting of the strip electrode due to the laser beam, the focal point of the laser beam is not able to focus on the strip electrode. In this case, it is difficult to cut the strip electrode with high precision. An object of the present invention is to suppress rattling of the strip electrode and consequently cut the strip electrode with high precision in a laser processing device.

### Means for Resolving the Problem

A laser processing device according to first aspect of the present invention comprises a conveyance device, a laser irradiating unit, a controller, and a guide. The conveyance device conveys a strip electrode in a conveyance direction. The laser irradiating unit irradiates the strip electrode with a laser beam and is configured to change the irradiating direction of the laser beam. The controller controls the laser irradiating unit so as to cut the strip electrode into a tab shape by causing the laser beam to move along a predetermined path on the strip electrode. The guide holds the strip electrode. The guide includes a notch. The notch has a shape that follows at least a portion of the predetermined path.

In the laser processing device according to the present aspect, the strip electrode is held by the guide. The laser beam is irradiated onto the strip electrode through a notch whereby the strip electrode is cut into a tab shape. The notch has a shape that follows at least a portion of the predetermined path of the laser beam whereby rattling of the strip electrode is effectively suppressed.

The predetermined path may include a first inclined path. The first inclined path may be inclined with respect to the width direction that is perpendicular to the conveyance direction. The notch may also include a first edge section that follows the first inclined path. In this case, rattling of the strip electrode when the strip electrode is cut along the first inclined path is suppressed by the first edge section.

The predetermined path may include a second inclined path. The second inclined path may be inclined with respect to the width direction in a direction opposite the first inclined path. The notch may also include a second edge section that follows the second inclined path. In this case, rattling of the strip electrode when the strip electrode is cut along the second inclined path is suppressed by the second edge section.

The first inclined path may extend from a first position to a second position. The second position may be positioned further to the outside in the width direction and further in the conveyance direction than the first position. The second inclined path may extend from a third position to a fourth position. The third position may be positioned in a direction opposite the conveyance direction with respect to the second position. The fourth position may be positioned further to the inside in the width direction and further in the conveyance direction than the third position. The controller may cause the laser beam to move from the first position to the second position. The controller may cause the laser beam to move from the second position to the third position. The controller may cause the laser beam to move from the third position to the fourth position. In this case, one side of the tab shape is formed by the laser beam moving along the first inclined path. One more side of the tab shape is formed by the laser beam moving along the second inclined path. In addition, by changing the lengths of the first inclined path and the second inclined path without changing the inclination angle of the first inclined path and the second inclined path, the length of the tab in the width direction of the strip electrode can be changed.

The fourth position may be the same position as the first position. In this case, the movement distance of the laser beam can be reduced.

The second edge may be positioned in the opposite direction of the conveyance direction with respect to the first edge section. The first edge section may be inclined with respect to the width direction toward the outside of the strip electrode in the width direction and toward the conveyance direction. The second edge section may be inclined with respect to the width direction toward the outside of the strip electrode in the width direction and toward the direction opposite the conveyance direction. In this case, the first edge section extends along the first inclined path. The second edge section extends along the second inclined path. Therefore, a common guide can be used for processing different lengths of the first inclined path and the second inclined path. That is, a common guide can be used for processing different lengths of tabs.

The guide may also include a first upper guide plate and a first lower guide plate. The first upper guide plate may be disposed in the conveyance direction with respect to the notch. The first upper guide plate may be disposed above an end material that is cut off from the strip electrode. The first lower guide plate may be disposed in the conveyance direction with respect to the notch. The first lower guide plate may be disposed below the end material. At least one of the first upper guide plate and the first lower guide plate may have a tapered shape that faces the notch. In this case, the end material that is cut off from the strip electrode is able to easily enter between the first upper guide plate and the first lower guide plate due to the tapered shape. Consequently, rattling of the strip electrode is more effectively suppressed.

The laser irradiating unit may be disposed above the guide. The guide may also include a first upper guide plate and a second upper guide plate. The first upper guide plate may be disposed in the conveyance direction with respect to the notch. The first upper guide plate may be disposed above an end material that is cut off from the strip electrode. The second upper guide plate may be disposed in the direction opposite the conveyance direction with respect to the notch. The second upper guide plate may be disposed above the strip electrode. At least one of the first upper guide plate and the second upper guide plate may have a tapered shape that faces upward. In this case, the first upper guide plate and/or the second upper guide plate are prevented from interfering with the laser beam due to the tapered shape. As a result, the guide can be disposed closer to the path of the laser beam. Consequently, rattling of the strip electrode is more effectively suppressed.

The laser processing device may further comprise a suction roller. The suction roller may be disposed in the conveyance direction with respect to the guide. The suction roller may suction the end material cut off from the strip electrode. In this case, the end material is easily recovered.

### Effect of the Invention

According to the present invention, rattling of a strip electrode is suppressed and as a result the strip electrode can be cut with high precision in a laser processing device.

### Brief Description of Drawings

FIG. 1 is a schematic view illustrating a configuration of a laser processing device according to an embodiment.
FIG. 2 is a perspective view illustrating an example of a strip electrode.
FIG. 3 is a block diagram of a control system of the laser processing device.
FIG. 4 is a perspective view illustrating a portion of the laser processing device.
FIG. 5A is a top view illustrating a predetermined path of a laser beam.
FIG. 5B is a top view illustrating an example of a tab shape of the strip electrode processed by the laser processing device.
FIG. 6 is a perspective view illustrating laser processing positions on the strip electrode.
FIG. 7 is a view illustrating a predetermined path and the shape of a notch of a guide according to a first modified example.
FIG. 8 is a view illustrating a predetermined path and the shape of a notch of a guide according to a second modified example.

### Description of Embodiments

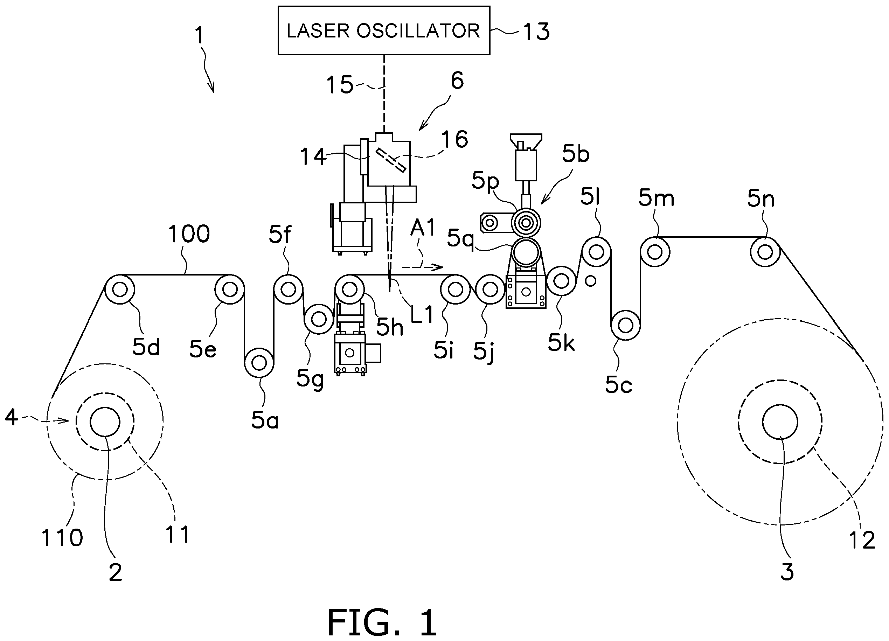

A laser processing device for processing a strip electrode according to an embodiment will be explained below with reference to the drawings. FIG. 1 is a schematic side view illustrating a configuration of a laser processing device 1 according to the embodiment. Arrow A1 in the drawing represents the conveyance direction of a strip electrode 100.

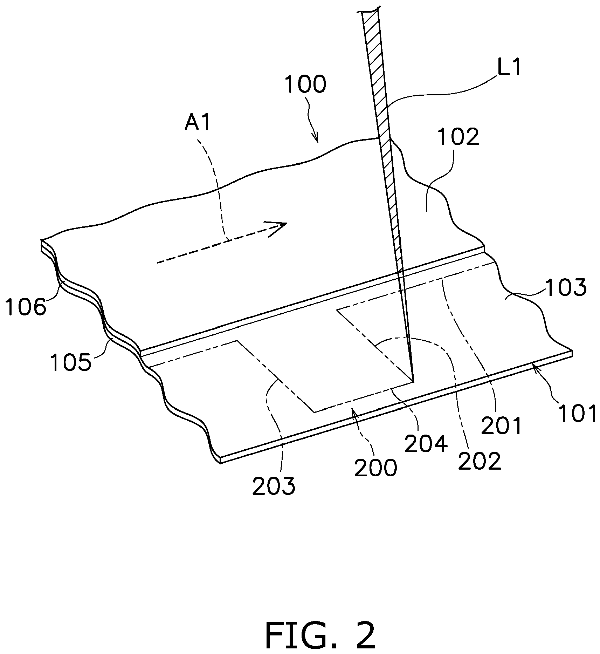

FIG. 2 is a view illustrating an example of the strip electrode 100. As illustrated in FIG. 2, the strip electrode 100 includes an edge 101. The edge 101 is one edge in the width direction of the strip electrode 100. The width direction of the strip electrode 100 is a direction perpendicular to the longitudinal direction of the strip electrode 100. The width direction of the strip electrode 100 is a direction perpendicular to a conveyance direction A1 of the strip electrode 100 in the laser processing device 1.

The strip electrode 100 includes a metal foil 105 and an active material layer 106. The active material layer 106 is applied to at least one surface of the metal foil 105. The strip electrode 100 includes a coated section 102 and an uncoated section 103. The active material layer 106 is provided to the coated section 102. The uncoated section 103 is provided along the edge 101. The uncoated section 103 is a portion to which the active material layer 106 is not provided. The metal foil 105 is exposed in the uncoated section 103. The laser processing device 1 forms a tab 200 in the strip electrode 100 by cutting the uncoated section 103 with a laser beam L1.

As illustrated in FIG. 1, the laser processing device 1 includes a winding out shaft 2, a winding shaft 3, a conveyance device 4, a plurality of rollers 5a to 5n, and a laser irradiating unit 6. The strip electrode 100 (referred to below as "electrode roll 110") wound into a roll is assembled onto the winding out shaft 2. The winding shaft 3 winds up the processed strip electrode 100 into a roll.

The conveyance device 4 causes the strip electrode 100 to move from the winding out shaft 2 to the winding shaft 3. The conveyance device 4 includes a first drive motor 11 and a second drive motor 12. The first drive motor 11 is connected to the winding out shaft 2. The first drive motor 11 causes the winding out shaft 2 to rotate. The second drive motor 12 is connected to the winding shaft 3. The second drive motor 12 causes the winding shaft 3 to rotate.

The plurality of rollers 5a to 5n are provided so as to be able to rotate about the centers of the rollers 5a to 5n. The plurality of rollers 5a to 5n include a first dancer roller 5a, a nip roller 5b, a second dancer roller 5c, and a plurality of guide rollers 5d to 5n. The first dancer roller 5a is disposed between the winding out shaft 2 and the nip roller 5b. The first dancer roller 5a applies a predetermined tension to the strip electrode 100 let out from the winding out shaft 2. The nip roller 5b is disposed between the first dancer roller 5a and the second dancer roller 5c. The nip roller 5b includes a first roller 5p and a second roller 5q. The nip roller 5b presses the strip electrode 100 between the first roller 5p and the second roller 5q. The second dancer roller 5c is disposed between the winding shaft 3 and the nip roller 5b. The second dancer roller 5c imparts a predetermined tension to the strip electrode 100 to be wound up by the winding shaft 3.

The laser irradiating unit 6 cuts the strip electrode 100 by irradiating the laser beam L1 onto the strip electrode 100. The laser irradiating unit 6 is a so-called galvanoscanner-type laser device. The laser irradiating unit 6 includes a laser oscillator 13 and a head 14. The laser oscillator 13 generates the laser beam L1. The head 14 is connected to the laser oscillator 13 by means of a fiber cable 15. The head 14 is disposed between the winding out shaft 2 and the winding shaft 3.

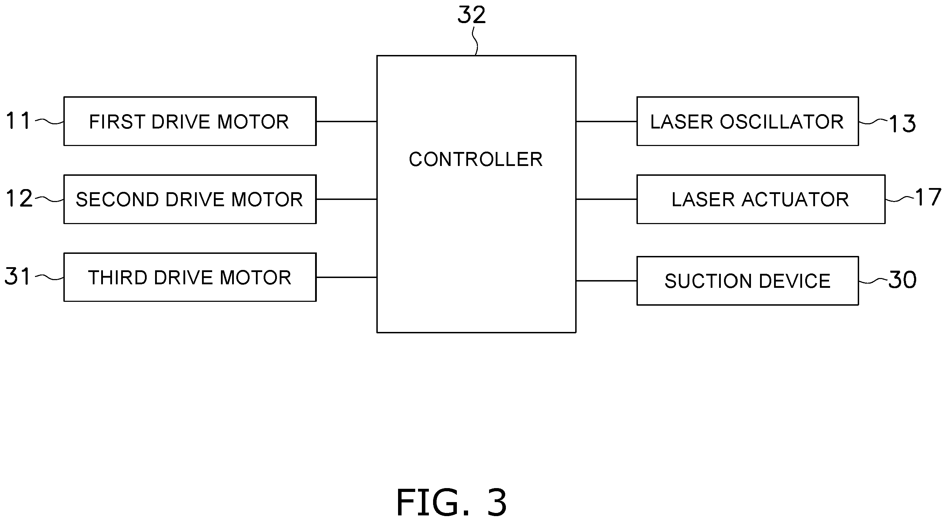

As illustrated in FIG. 1, the head 14 includes a mirror 16. The mirror 16 is disposed so as to be able to rotate. FIG. 3 is a block diagram of a control system of the laser processing device 1. The mirror 16 is connected to a laser actuator 17 illustrated in FIG. 3. The laser actuator 17 is, for example, an electric motor. The rotation angle of the mirror 16 is changed by the laser actuator 17. The laser irradiating unit 6 causes the irradiation direction of the laser from the head 14 to change by changing the rotation angle of the mirror 16. Consequently, the strip electrode 100 is cut into a desired shape.

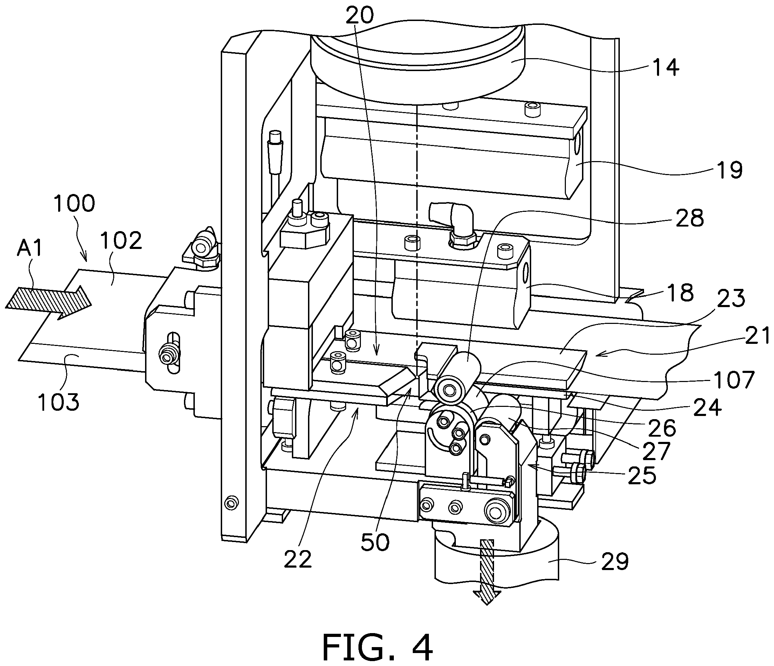

FIG. 4 is a perspective view illustrating a portion of the laser processing device 1. As illustrated in FIG. 4, the head 14 is disposed above the strip electrode 100. The strip electrode 100 is conveyed in the horizontal direction below the head 14. The laser processing device 1 includes a first air blow device 18 and a second air blow device 19. The first air blow device 18 and the second air blow device 19 are disposed between the head 14 and the strip electrode 100. The first air blow device 18 blows air toward positions (referred to below as "laser processing positions") where the strip electrode 100 receives the laser beam L1. Consequently, fumes generated as a result of the processing by the laser beam L1 are blown away. The second air blow device 19 blows air so that the fumes do not adhere to the mirror 16.

The laser processing device 1 comprises a guide 20. The guide 20 is disposed below the head 14. The guide 20 holds the strip electrode 100 around the laser processing positions. The guide 20 includes a workpiece guide 21 and a foil guide 22. The workpiece guide 21 holds the coated section 102. The workpiece guide 21 includes an upper plate 23 and a lower plate 24. The upper plate 23 is disposed above the coated section 102. The lower plate 24 is disposed below the coated section 102. The coated section 102 is sandwiched between the upper plate 23 and the lower plate 24. The coated section 102 is conveyed between the upper plate 23 and the lower plate 24. The foil guide 22 holds the uncoated section 103. A detailed explanation of the foil guide 22 is provided below.

The laser processing device 1 includes a recovery device 25. The recovery device 25 recovers the metal foil 105 (referred to below as "end material 107") cut off from the strip electrode 100. The recovery device 25 includes a suction roller 26, a first nip roller 27, a second nip roller 28, and a recovery duct 29. The suction roller 26 is positioned in the conveyance direction A1 with respect to the foil guide 22. The suction roller 26 suctions the end material 107. For example, a plurality of pores are provided to the surface of the suction roller 26. The inside of the suction roller 26 is set to a negative pressure by a suction device 30 illustrated in FIG. 3. The suction device 30 is, for example, a pump or a fan. The suction roller 26 rotates by means of a third drive motor 31 illustrated in FIG. 3. The first nip roller 27 and the second nip roller 28 face the suction roller 26. The first nip roller 27 is disposed above the suction roller 26. The first nip roller 27 is disposed in the conveyance direction A1 with respect to the suction roller 26. Due to the rotation of the suction roller 26, the end material 107 passes between the suction roller 26 and the first nip roller 27 and is fed to the recovery duct 29.

As illustrated in FIG. 3, the laser processing device 1 includes a controller 32. The controller 32 includes a processor such as a CPU and a memory such as a RAM or a ROM. The controller 32 controls the first drive motor 11 and the second drive motor 12 thereby letting out the strip electrode 100 from the electrode roll 110, causing the strip electrode 100 to move over the plurality of rollers 5a to 5n, and winding the strip electrode 100 into a roll shape on the winding shaft 3.

The controller 32 controls the laser oscillator 13 thereby causing the laser beam to be irradiated from the head 14. The controller 32 controls the laser actuator 17 thereby changing the irradiation direction of the laser beam L1 from the head 14. The controller 32 causes the laser beam L1 from the head 14 to move along a predetermined path on the strip electrode 100 thereby cutting the edge 101 of the strip electrode 100 into a shape having a tab 200 and a bottom side 201 as illustrated in FIG. 2. As illustrated in FIG. 2, the bottom side 201 extends in the conveyance direction A1. The tab 200 includes a first side 202, a second side 203, and a top side 204. The first side 202 and the second side 203 extend in the width direction from the bottom side 201. The top side 204 extends in the conveyance direction A1. The predetermined path of the laser beam L1 is explained below.

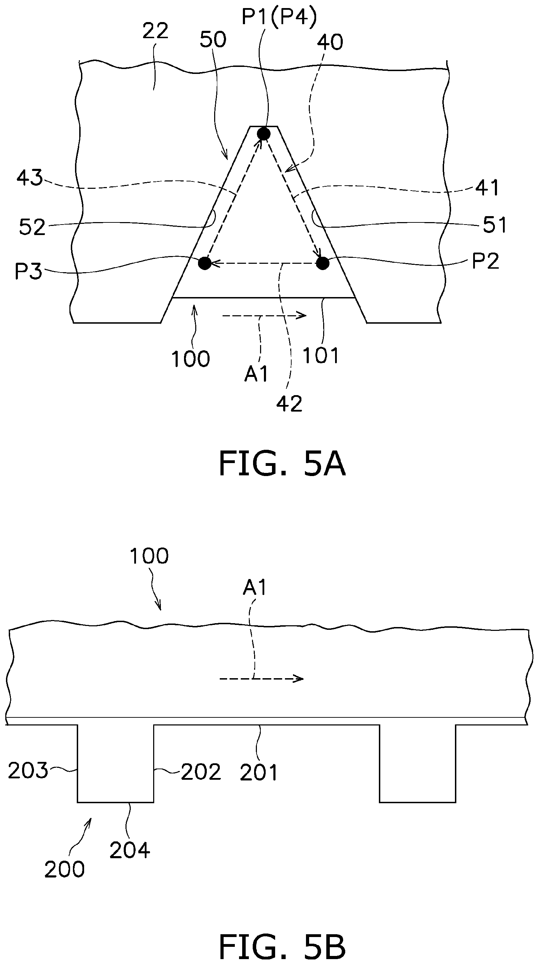

FIG. 5A is a top view illustrating laser processing positions of the strip electrode 100. The controller 32 causes the laser beam L1 to move over the strip electrode 100 following a predetermined path 40 illustrated in FIG. 5A. The predetermined path 40 includes a first path 42, a second path 42, and a third path 43. The first path 41 is inclined with respect to the width direction. The first path 41 is an example of a first inclined path in the present embodiment. The first path 41 extends from a first position P1 to a second position P2. The first position P1 is separated from the edge 101 of the strip electrode 100 toward the inside in the width direction. The second position P2 is positioned further to the outside in the width direction and further in the conveyance direction A1 than the first position P1.

The second path 42 is parallel to the conveyance direction A1. The second path 42 extends from the second position P2 to a third position P3. The third position P3 is positioned in a direction opposite the conveyance direction A1 with respect to the second position P2. The third path 43 is inclined with respect to the width direction in the opposite direction from the first path 41. The third path 43 is an example of a second inclined path in the present embodiment. The third path 43 extends from the third position P3 to a fourth position P4. The fourth position P4 is positioned further inside in the width direction and further in the conveyance direction A1 than the third position P3. In the present embodiment, the fourth position P4 is the same as the first position P1. Therefore, the predetermined path 40 has a triangular loop shape with the first position P1, the second position P2, and the third position P3 as the vertices.

The controller 32 maintains the laser beam L1 at the first position P1. Consequently, the strip electrode 100 is cut along the bottom side 201 as illustrated in FIG. 5B. Next, the laser beam L1 is moved from the first position P1 to the second position P2 along the first path 41. Consequently, the strip electrode 100 is cut along the first side 202 as illustrated in FIG. 5B. Next, the controller 32 causes the laser beam L1 to move from the second position P2 to the third position P3 along the second path 42. Consequently, the strip electrode 100 is cut along the top side 204 as illustrated in FIG. 5B. Next, the controller 32 causes the laser beam L1 to move from the third position P3 to the first position P1 along the third path 43. Consequently, the strip electrode 100 is cut along the second side 203 as illustrated in FIG. 5B. The controller 32 maintains the laser beam L1 at the first position P1. Consequently, the strip electrode 100 is cut again along the bottom side 201. By repeating the above processing, a plurality of tabs 200 are formed with gaps therebetween in the strip electrode 100.

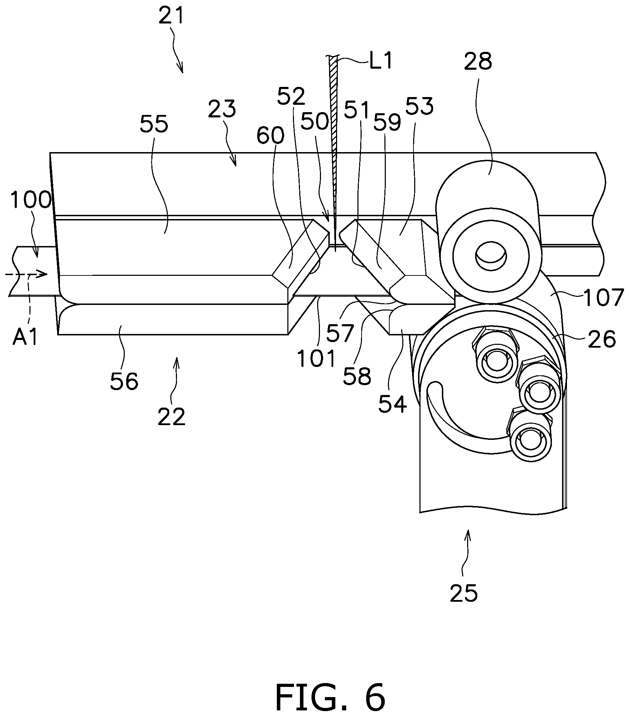

The foil guide 22 will be discussed next. FIG. 6 is a perspective view illustrating the laser processing positions on the strip electrode 100. As illustrated in FIG. 5A and 6A, the foil guide 22 includes a notch 50. The notch 50 has a shape that follows the predetermined path 40. Specifically, the notch 50 includes a first edge section 51 and a second edge section 52. The first edge section 51 has a shape that follows the first path 41. The first edge section 51 is inclined with respect to the width direction toward the outside of the strip electrode 100 in the width direction and toward the conveyance direction A1.

The second edge section 52 is positioned in the opposite direction in the conveyance direction A1 with respect to the second edge section 52. The second edge section 52 has a shape that follows the third path 43. The second edge section 52 is inclined with respect to the width direction toward the outside of the strip electrode 100 in the width direction and toward the direction opposite the conveyance direction A1.

As illustrated in FIG. 6, the foil guide 22 includes a first upper guide plate 53, a first lower guide plate 54, a second upper guide plate 55, and a second lower guide plate 56. The first upper guide plate 53 is disposed in the conveyance direction A1 with respect to the notch 50. The first upper guide plate 53 is disposed above the end material 107 that is cut off from the strip electrode 100. The first lower guide plate 54 is disposed in the conveyance direction A1 with respect to the notch 50. The first lower guide plate 54 is disposed below the end material 107. The abovementioned suction roller 26 is disposed in the conveyance direction A1 with respect to the first upper guide plate 53 and the first lower guide plate 54.

The inlet of the gap between the first upper guide plate 53 and the first lower guide plate 54 has a tapered shape that faces the notch 50. Specifically the first upper guide plate 53 includes a first inlet tapered face 57. The first lower guide plate 54 includes a second inlet tapered face 58. The first inlet tapered face 57 and the second inlet tapered face 58 are inclined so that the distance between the first inlet tapered face 57 and the second inlet tapered face 58 narrows toward the conveyance direction A1. The end material 107 passes through the inlet between the first inlet tapered face 57 and the second inlet tapered face 58 and enters the gap between the first upper guide plate 53 and the first lower guide plate 54. Consequently, the end material 107 enters easily into the gap between the first upper guide plate 53 and the first lower guide plate 54.

The second upper guide plate 55 is disposed opposite the conveyance direction A1 with respect to the notch 50. The second upper guide plate 55 is disposed above the strip electrode 100. The second upper guide plate 55 is disposed opposite the conveyance direction A1 with respect to the notch 50. The second lower guide plate 56 is disposed below the strip electrode 100. The first upper guide plate 53 and the second upper guide plate 55 have tapered shapes that face upward. Specifically the first upper guide plate 53 includes a first upper tapered face 59. The second upper guide plate 55 includes a second upper tapered face 60. The first upper tapered face 59 and the second upper tapered face 60 are inclined so that the distance between the first upper tapered face 59 and the second upper tapered face 60 widens upward. Consequently, the first upper guide plate 53 and the second upper guide plate 55 are less likely to interfere with the laser beam L1.

In the laser processing device 1 according to the present embodiment as discussed above, the strip electrode is held by the guide 20. The laser beam L1 passes through the notch 50 of the guide 20 and is irradiated onto the strip electrode 100 whereby the tab 200 is formed in the strip electrode 100. The notch 50 has a shape that follows at least a portion of the predetermined path 40 of the laser beam L1 whereby rattling of the strip electrode 100 is effectively suppressed. Consequently, the strip electrode 100 can be cut with high precision.

Although an embodiment of the present invention has been described so far, the present invention is not limited to the above embodiment and various modifications may be made within the scope of the invention. The configuration of the laser processing device 1 is not limited to the configuration of the above embodiment and may be modified.

The structures or dispositions of the winding out shaft 2, the winding shaft 3, the conveyance device 4, the plurality of rollers 5a to 5n, or the laser irradiating unit 6 are not limited to those of the above embodiment and may be changed. For example, the laser irradiating unit 6 is not limited to a galvanoscanner type and may be another type. The structure or disposition of the suction roller 26 is not limited to the above embodiment and may be changed.

The structure or disposition of the foil guide 22 is not limited to the above embodiment and may be changed. Only one of the first upper guide plate 53 and the first lower guide plate 54 may have a tapered shape that faces the notch. Only one of the first upper guide plate 53 and the second upper guide plate 55 may have a tapered shape that faces upward.

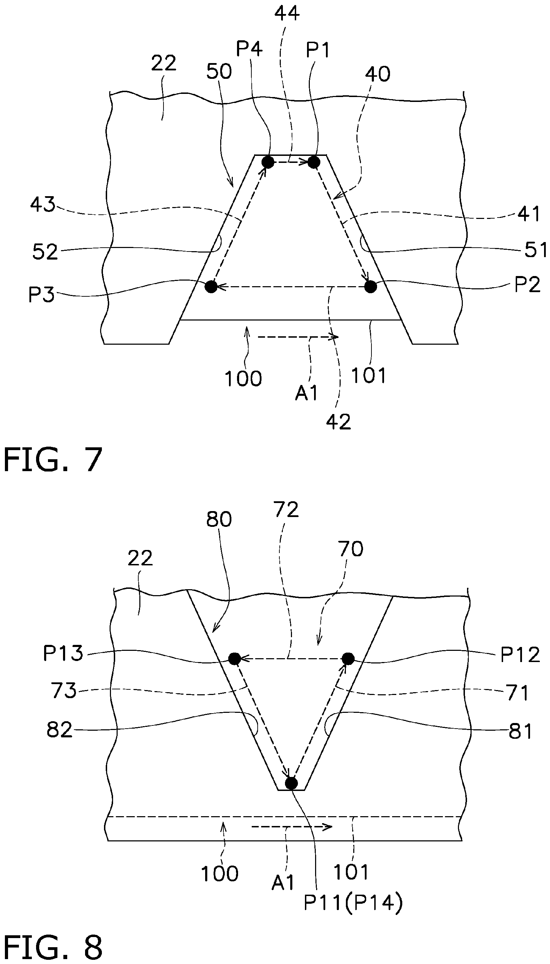

The predetermined path 40 is not limited to the above embodiment and may be changed. For example, FIG. 7 is a view illustrating the predetermined path 40 according to a first modified example. As illustrated in FIG. 7, the fourth position P4 may be a position different from the first position P1. The predetermined path 40 may include a fourth path 44. The fourth path 44 may extend from the fourth position P4 to the first position P1. The controller 32 may cause the laser beam L1 to move along the fourth path 44 from the fourth position P4 to the first position P1. Consequently, the strip electrode 100 may be cut along the bottom side 201. In addition, the notch 50 of the foil guide 22 may be changed to match the shape of the predetermined path 40 according to the first modified example.

FIG. 8 is a view illustrating a predetermined path 70 according to a second modified example. The predetermined path 70 according to the second modified example includes a first path 71, a second path 72, and a third path 73. The first path 71 extends from a first position P11 to a second position P12. The first position P11 is separated from the edge 101 of the strip electrode 100 toward the inside in the width direction. The second position P12 is positioned further inside in the width direction and further in the conveyance direction A1 than the first position P11.

The second path 72 is parallel to the conveyance direction A1. The second path 72 extends from the second position P12 to a third position P13. The third position P13 is positioned in a direction opposite the conveyance direction A1 with respect to the second position P12. The third path 73 extends from the third position P13 to a fourth position P14. The fourth position P14 is positioned further outside in the width direction and further in the conveyance direction A1 than the third position P13. The fourth position P14 is the same as the first position P11. However, the fourth position P14 may be a position different from the first position P11 in the same way as in the first modified example. As explained above, the predetermined path 70 according to the second modified example has a triangular loop shape with the first position P11, the second position P12, and the third position P13 as the vertices. However, the predetermined path 70 according to the second modified example faces in the opposite direction in the width direction of the predetermined path 40 according to the first modified example.

The controller 32 causes the laser beam L1 to move from the second position P12 to the third position P13 along the second path 72. Consequently, the strip electrode 100 is cut along the bottom side 201. Next, the controller 32 causes the laser beam L1 to move from the third position P13 to the first position P11 along the third path 73. Consequently, the strip electrode 100 is cut along the first side 202. The controller 32 maintains the laser beam L1 at the first position P11. Consequently, the strip electrode 100 is cut along the top side 204. Next, the laser beam L1 is moved from the first position P11 to the second position P12 along the first path 71. Consequently, the strip electrode 100 is cut along the second side 203. The controller 32 causes the laser beam L1 to move from the second position P12 to the third position P13 along the second path 72. Consequently, the strip electrode 100 is cut again along the bottom side 201. By repeating the above processing, a plurality of tabs 200 are formed with gaps therebetween in the strip electrode 100.

A notch 80 of the foil guide 22 in the second modified example may be changed to match the shape of the predetermined path 70 according to the second modified example. The notch 80 may include a first edge section 81 and a second edge section 82. The first edge section 81 may be inclined with respect to the width direction toward the inside of the strip electrode 100 in the width direction and toward the conveyance direction A1 along the first path 71. The second edge section 82 may be inclined with respect to the width direction toward the outside of the strip electrode 100 in the width direction and toward the conveyance direction A1 along the third path 73.

### Industrial Applicability

According to the present invention, rattling of a strip electrode is suppressed whereby the strip electrode can be cut with high precision in a laser processing device.

### List of Reference Numerals

- 4:: Conveyance device
- 6:: Laser irradiating unit
- 20:: Guide
- 26:: Suction roller
- 32:: Controller
- 50:: Notch
- 51:: First edge section
- 52:: Second edge section
- 53:: First upper guide plate
- 54:: First lower guide plate
- 55:: Second upper guide plate
- 71:: First path (first inclined path)
- 73:: Third path (second inclined path)
- 100:: Strip electrode
- A1:: Conveyance direction
- P1:: First position
- P2:: Second position
- P3:: Third position
- P4:: Fourth position

## Claims

1. A laser processing device for processing a strip electrode, the device comprising:
a conveyance device that conveys the strip electrode in a conveyance direction;
a laser irradiating unit that irradiates the strip electrode with a laser beam and is configured to change an irradiating direction of the laser beam;
a controller configured to control the laser irradiating unit so as to cut the strip electrode into a tab shape by causing the laser beam to move along a predetermined path on the strip electrode; and
a guide that holds the strip electrode,
wherein the guide includes a notch having a shape that follows at least a portion of the predetermined path.

2. The laser processing device according to claim 1, wherein
the predetermined path includes a first inclined path inclined with respect to a width direction that is perpendicular to the conveyance direction, and
the notch includes a first edge section that follows the first inclined path.

3. The laser processing device according to claim 2, wherein
the predetermined path includes a second inclined path inclined with respect to the width direction in a direction opposite the first inclined path, and
the notch includes a second edge section that follows the second inclined path.

4. The laser processing device according to claim 3, wherein
the first inclined path extends from a first position to a second position located further to an outside in the width direction and further in the conveyance direction than the first position, and
the second inclined path extends from a third position located in a direction opposite the conveyance direction with respect to the second position, to a fourth position located further to an inside in the width direction and further in the conveyance direction than the third position, and
the controller is configured to
cause the laser beam to move from the first position to the second position,
cause the laser beam to move from the second position to the third position, and
cause the laser beam to move from the third position to the fourth position.

5. The laser processing device according to claim 4, wherein
the fourth position is a same position as the first position P1.

6. The laser processing device according to claim 4 or 5, wherein
the second edge section is positioned in the opposite direction of the conveyance direction with respect to the first edge section,
the first edge section is inclined with respect to the width direction toward the outside of the strip electrode in the width direction and toward the conveyance direction, and
the second edge section is inclined with respect to the width direction toward the outside of the strip electrode in the width direction and toward the direction opposite the conveyance direction.

7. The laser processing device according to any one of claims 1 to 6, wherein
the guide includes
a first upper guide plate disposed in the conveyance direction with respect to the notch and disposed above an end material cut off from the strip electrode, and
a first lower guide plate disposed in the conveyance direction with respect to the notch and disposed below the end material, and
at least one of the first upper guide plate and the first lower guide plate have a tapered shape that faces the notch.

8. The laser processing device according to any one of claims 1 to 6, wherein
the laser irradiating unit is disposed above the guide, and
the guide includes
a first upper guide plate disposed in the conveyance direction with respect to the notch and disposed above an end material cut off from the strip electrode, and
a second upper guide plate disposed in the direction opposite the conveyance direction with respect to the notch and disposed above the strip electrode, and
at least one of the first upper guide plate and the second upper guide plate has a tapered shape that faces upward.

9. The laser processing device according to any one of claims 1 to 8, further comprising
a suction roller disposed in the conveyance direction with respect to the guide and configured to suction the end material cut off from the strip electrode.
